# EUROPEAN PATENT SPECIFICATION

(11) **EP 3 550 357 B1**
(45) Date of publication and mention of the grant of the patent: **28.07.2021**
(21) Application number: 17829911.1
(22) Date of filing: 30.06.2017
(51) Int. Cl.: G02F 1/1337, G02F 1/1333, G02F 1/137, C09K 19/56, G02F 1/01

(54) **ALIGNMENT MATERIAL COMPOSITION AND LIQUID CRYSTAL DISPLAY PANEL AND PREPARATION METHODS THEREFOR AND DISPLAY DEVICE USING SAME**
AUSRICHTUNGSMATERIALZUSAMMENSETZUNG UND FLÜSSIGKRISTALLANZEIGETAFEL UND HERSTELLUNGSVERFAHREN DAFÜR UND ANZEIGEVORRICHTUNG MIT VERWENDUNG DAVON
COMPOSITION DE MATÉRIAU D'ALIGNEMENT ET PANNEAU D'AFFICHAGE À CRISTAUX LIQUIDES ET LEURS PROCÉDÉS DE PRÉPARATION ET DISPOSITIF D'AFFICHAGE L'UTILISANT

(30) Priority: 29.11.2016 CN 201611072258
(43) Date of publication of application: 09.10.2019
(73) Proprietor: BOE Technology Group Co., Ltd., Beijing 100015 (CN); Chengdu BOE Optoelectronics Technology Co., Ltd., Chengdu, Sichuan 611731 (CN)
(72) Inventor: XIANG, Xi, Beijing 100176 (CN); JIANG, Ni, Beijing 100176 (CN); FENG, Yuanming, Beijing 100176 (CN)
(74) Representative: Klunker IP Patentanwälte PartG mbB
(86) International application number: PCT/CN2017/091184
(87) International publication number: WO 2018/099071

(56) References cited:
- WO-A1-2013/081064
- WO-A1-2013/094618
- CN-A- 101 493 610
- CN-A- 103 091 894
- CN-A- 104 212 463
- CN-A- 104 354 646
- CN-A- 105 038 818
- CN-A- 105 316 008
- US-A1- 2010 197 186
- US-A1- 2010 213 423
- US-A1- 2016 017 229

## Description

### TECHNICAL FIELD

The present invention relates to an alignment material composition, a liquid crystal display (LCD) panel, a manufacturing method thereof and a display device.

### BACKGROUND

LCD has become a mainstream product in flat-panel displays due to the characteristics of small volume, low power consumption, non-radiation, etc. LCD panel is an important component of the LCD. The current LCD panel comprises an array substrate, a color filter (CF) substrate opposed to the array substrate, and liquid crystals (LC) sealed between the array substrate and the CF substrate. The CF substrate and the array substrate are combined together via sealant to form a LC cell.

In the manufacturing process of the LCD panel, a uniform alignment layer is usually adopted to realize the alignment of LC molecules, and the alignment uniformity of the LC molecules directly affects the quality of the LCD. The rubbing alignment technology and the photo-alignment technology are currently mainly adopted to process the alignment layer to align the LC molecules.

CN 105 038 818 A discloses a LC alignment agent having low ion density, and a LC alignment film formed thereby and a LCD element having the LC alignment film. The LC alignment agent comprises a polymer (A), a benzotriazole compound (B) and a solvent (C), wherein the polymer (A) is obtained by reacting a mixture comprising a tetracarboxylic acid dianhydride component (a) and a diamine component (b).

CN 104 354 646 A discloses a large automobile LC anti-dazzling rearview mirror. The rearview mirror comprises LCD screens, wherein each LCD screen is mainly composed of a first ITO (Indium-Tin Oxide) conductive glass substrate and a second ITO conductive glass substrate; each first ITO conductive glass substrate is coated with a polyimide insulating layer and alignment agent; an aluminum or silver reflecting layer and the alignment agent are plated on each second ITO conductive glass substrate; the first ITO conductive glass substrates and the second ITO conductive glass substrates are mutually separated by 5 µm to 18 µm spacing materials to form LC boxes; in vacuum, a green LC mixture, a blue LC mixture and a black LC mixture are respectively injected into the corresponding LC box; after sealing is implemented, display screens are respectively manufactured. According to the rearview mirror, a negative dielectric anisotropic nematic LC mixing material stable to ultraviolet (UV) light is manufactured by adopting cyclohexane type and fluorine-containing type LC monomers stable to the UV light, so that the stability, to the UV light, of the rearview mirror is improved greatly.

CN 104 212 463 A discloses an oriented material composition, a flattened material composition, a LCD device and a method for adjusting the display color of the LCD device. The oriented material composition and the flattened material composition respectively comprise 0.5-20wt% of an organic additive, and the organic additive is one or more selected from spiropyran compounds, Schiff base compounds and heterocyclic diarylethene compounds. The addition of the organic additive to the oriented or flattened layer of the LCD device realizes the adjustment of the display color in a large color range without influencing the other display performances of the LCD device.

CN 103 091 894 A discloses a color film substrate and a LC panel. The color film substrate comprises a substrate and a color filter layer, wherein an optical layer which contains UV absorption materials is arranged on the color filter layer. The UV absorption materials can absorb UV and prevent color resin from being damaged after the UV penetrates through the optical layer.

WO 2013/094618 A1 discloses a LC aligning agent which contains a compound represented by Formula [1], in which R1 represents a hydrogen atom or a methyl group; R2 represents a benzene ring; R3 represents a hydrogen atom or a benzene ring; and X represents a single bond or an oxygen atom and at least one kind of polymer that is selected from among polyimide precursors and polyimides.

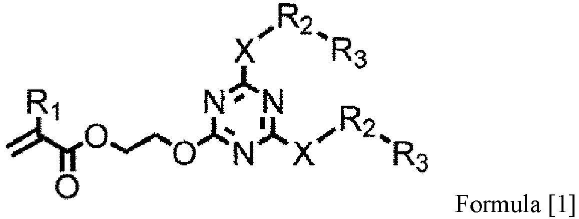

CN 105 316 008 A discloses a reactive vertical orientation material, a LCD panel and a LC orientation method. The structural general formula of the reactive vertical orientation material is A-Z-R, wherein A refers to -CH=CH-COOH, Z is shown in the description and n is larger than or equal to 1; R refers to a linear alkyl with 5-20 C atoms or branched alkyl, and a certain CH2 group in alkyl is a group substituted by a phenyl group, a naphthenic base, -CONH-, -COO-, -O-CO-, -S-, -CO- or -CH=CH- or a certain H atom in alkyl is a group substituted by an F or Cl atom. The head group A plays the main effect of anchoring, can be anchored on the surface of a base plate by depending on -COOH in a physical action manner on one hand, and can further enhance the capacity of anchoring LC molecules by depending on -CH=CH- or reaction between -CH=CH- and a reactive monomer; the middle group Z and the tail group R can play the effect similar to a PI branch, so as to realize vertical orientation of LC molecules in a steric hindrance manner.

US 2010/197186 A1 discloses a photoalignment material and a method of manufacturing of a display substrate using the photoalignment material. The photoalignment material includes a photoalignment polymer, a photoalignment additive, and an organic solvent. When the photoalignment additive is used, a side reaction due to UV light may be prevented, and the stability of alignment layer may be improved.

US 2016/017229 A1 discloses a photo-alignment composition including a compound comprising a repeat unit represented by chemical Formula [2] and a solvent. The photo-alignment composition is coated on a first substrate and a second substrate facing the first substrate, thus forming alignment layers. A liquid crystal layer is formed between the first substrate and the second substrate. The photo-alignment composition includes a compound structure having a high decomposition rate and a functional group capable of a hydrogen bond, which is weaker than a covalent bond.

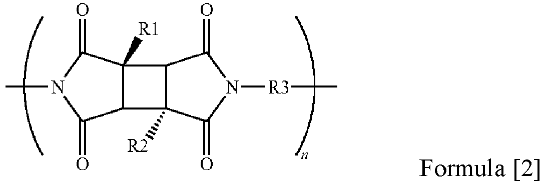

WO 2013/081064 A1 discloses a liquid crystal aligning agent which has good rubbing resistance and is capable of providing a liquid crystal alignment film that has high resistance to a process for aligning liquid crystals by the irradiation of UV light. The liquid crystal aligning agent contains a specific compound that contains a triazine skeleton and a hydroxyl group is represented by Formula [3], in which each of R1-R14 independently represents a hydrogen atom or a monovalent organic group, and one or more groups among the R1-R14 groups are organic groups, each of which contains an alkyl group having 4 or more carbon atoms.

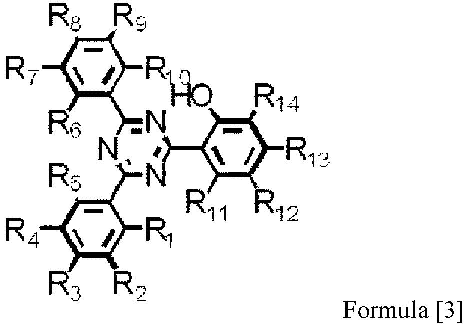

US 2010/213423 A1 discloses an alignment material composition including an alignment material, an UV absorbent, a light stabilizer and a solvent is provided. The UV absorbent has a formula [4], in which X represents hydrogen, alkyl group or halogen while R1 represents benzene ring carbon long-chain derivative. The light stabilizer has a Formula [5], in which R2 represents ester-based derivative or amine-based derivative, R3 represents hydrogen, hydroxyl group (-OH) or alkyl group.

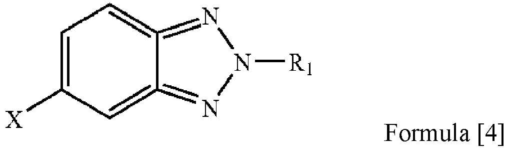

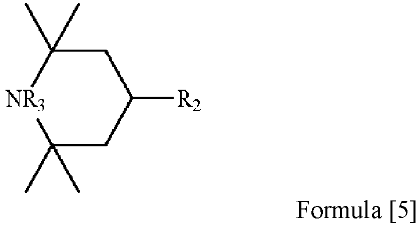

CN 101 493 610 A discloses an alignment material combination, comprising an alignment material, an UV absorbing agent, a light stabilizer and a solvent; the UV absorbing agent has the chemical Formula [6], in which X presents hydrogen, alkyl or halogen; R1 presents a benzene ring long-carbon chain derivate; the light stabilizer has the chemical formula shown in formula 2, wherein, R2 presents ester group derivates or ammonium group derivates; and R3 presents hydrogen, -OH (hydroxyl group) or alkyl.

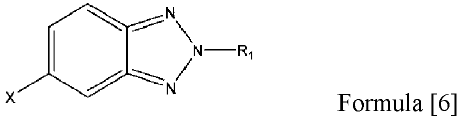

### SUMMARY

It is an object of the present invention to provide alignment material composition, a LCD panel, a manufacturing method thereof and a display device.

The object is achieved by the features of the respective independent claims. Further embodiments are defined in the corresponding dependent claims. Even though the description refers to embodiments or to the invention, it is to be understood that the invention is defined by the claims and embodiments of the invention are those comprising at least all the features of one of the independent claims.

### BRIEF DESCRIPTION OF THE DRAWINGS

FIG. 1 is a diagram illustrating the manufacturing process of an LCD panel;
FIG. 2 is a schematic structural sectional view of an LCD panel provided by an embodiment of the present disclosure;
FIG. 3 is a flow diagram illustrating the manufacturing process of the LCD panel provided by an embodiment of the present disclosure; and
FIG. 4 is a diagram illustrating the manufacturing process of the LCD panel provided by an embodiment of the present disclosure.

### DETAILED DESCRIPTION

In order to make objects, technical details and advantages of the embodiments of the disclosure apparent, the technical solutions of the embodiment will be described in a clearly and fully understandable way in connection with the drawings related to the embodiments of the disclosure. It is obvious that the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. Also, the terms such as "a," "an," etc., are not intended to limit the amount, but indicate the existence of at least one.

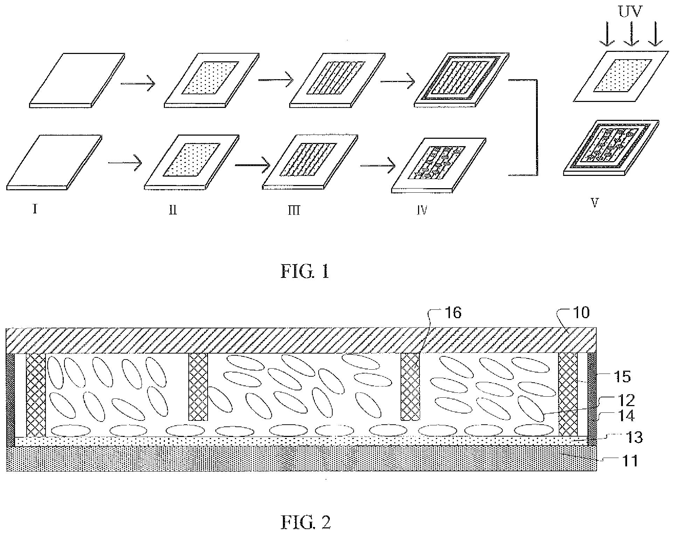

For example, FIG. 1 is a diagram illustrating the manufacturing process of an LCD panel. As illustrated in FIG. 1, the conventional manufacturing process of the LCD panel is as follows: respectively forming an array structure and a CF structure on a first substrate (e.g., a substrate on the lower side in FIG. 1) and a second substrate (e.g., a substrate on the upper side in FIG. 1); respectively coating alignment materials on the first substrate and the second substrate; forming an alignment layer by performing a rubbing process on the alignment materials, so that subsequent liquid crystal molecules can be regularly arranged and aligned; dripping liquid crystals on the first substrate; coating sealant on the second substrate; performing vacuum cell-assembly on the first substrate and the second substrate; performing UV pre-curing and primary thermocuring on the sealant; applying a shielding mask when external light is adopted for pre-curing; and obtaining single LCD panels by cutting along an LCD panel motherboard. The pre-curing of the sealant mostly adopts UV light irradiation. However, when UV light irradiation is adopted for the pre-curing of the sealant, liquid crystals in a display region will be damaged. Therefore, a metal-plated mask is generally employed to shield the display region of the LCD panel in the process. As the size of display regions of different LCD panels is different, corresponding masks must be manufactured for different LCD panels. Thus, the production cost of the LCD panel is increased, and the manufacturing process is complicated.

In addition, more and more attention has been paid to vehicle-mounted LCD panels. When the vehicle-mounted LCD panel is required to be used outdoors for a long period of time, the long-term exposure to UV light irradiation tends to produce yellowish periphery on the display panel, resulting in poor display. Therefore, the capability of the LCD panel in resisting UV irradiation must be further improved.

As described above, a metal-plated mask is usually adopted to shield a display region in the process of adopting UV light irradiation for the pre-curing of sealant. As the size of display regions of different LCD panels is different, corresponding masks must be manufactured for different LCD panels. In this case, the manufacturer needs a plurality of different masks, so the production cost is increased and the manufacturing process is complicated. In order to solve the above problem, the embodiments of the present disclosure provide an alignment material composition and an LCD panel comprising an alignment layer formed by the alignment material composition. The alignment material composition includes: about 89 wt % - 94.9 wt % of an organic solvent; about 0.1 wt % - 1 wt % of an organic additive; and about 5 wt % - 10 wt % of polyimide resin. The organic additive is capable of absorbing ultraviolet (UV) light of wavelength from about 290 nm to about 400 nm.

For example, the alignment material composition not only can form the alignment layer by alignment process but also can effectively block the UV light irradiation on liquid crystal molecules by absorbing UV light. Thus, when the alignment material composition is applied to the LCD panel, corresponding UV light mask is not required to be manufactured for LCD panels with different sizes of display regions. Therefore, the production cost of the LCD panel can be reduced; the manufacturing process of sealant pre-curing can be simplified; the capability of the LCD panel in resisting UV light irradiation can be improved; and the product quality can be improved.

An embodiment of the present disclosure provides an alignment material composition, which comprises: about 89 wt % - 94.9 wt % of an organic solvent; about 0.1 wt % - 1 wt % of an organic additive; and about 5 wt % - 10 wt % of polyimide resin. The organic additive is capable of absorbing ultraviolet (UV) light of wavelength from about 290 nm to about 400 nm.

For example, the organic solvent in the embodiment of the present disclosure comprises at least one selected from the group consisting of N-methyl-2-pyrrolidone, γ-butyrolactone and butyl cellosolve. The organic solvent may be one or more selected from the group consisting of N-methyl-2-pyrrolidone, γ-butyrolactone and butyl cellosolve. Description will be given below by taking the case that the organic solvent simultaneously comprises the above three materials as an example.

For example, in the alignment material composition, a mass percentage of N-methyl-2-pyrrolidone is about 15 wt % - 20 wt %; a mass percentage of γ-butyrolactone is about 60 wt % - 70 wt %; and a mass percentage of butyl cellosolve is about 10 wt % - 15 wt %.

For example, N-methyl-2-pyrrolidone is a solvent to dissolve polyimide; butyl cellosolve is a solvent for guaranteeing the liquidity of the alignment material composition; and γ-butyrolactone is a solvent for ensuring the edge linearity of the alignment material composition.

N-methyl-2-pyrrolidone, γ-butyrolactone and butyl cellosolve are all organic solvents showing high boiling point. For example, the boiling point of N-methyl-2-pyrrolidone is 203 °C; the boiling point of γ-butyrolactone is 204 °C; and the boiling point of butyl cellosolve is 171.7 °C.

For example, the preparation method of the alignment material composition comprises: dissolving about 5 wt % - 10 wt % of polyimide resin into about 15 wt % - 20 wt % of N-methyl-2-pyrrolidone, about 60 wt % - 70 wt % of γ-butyrolactone and about 10 wt % - 15 wt % of butyl cellosolve (ethylene glycol monobutyl ether); adding about 0.1 wt % - 1 wt % of an organic additive after fully stirring; and intensively stirring to uniformly mix the components and then obtaining the alignment material composition.

For example, dissolving about 6 wt % of polyimide resin into about 16 wt % N-methyl-2-pyrrolidone, about 65 wt % of γ-butyrolactone and about 12 wt % of butyl cellosolve (ethylene glycol monobutyl ether); adding about 1 wt % of an organic additive after fully stirring; and the components are uniformly mixed by sufficient stirring to prepare the alignment material composition.

For example, polyimide resin is polyimide resin commonly used in the process of preparing the alignment material composition in the present field.

For example, the organic additive is capable of absorbing the energy of UV light, storing the absorbed energy, and finally converting the energy into environment-friendly heat for release. The organic additive almost does not absorb any visible light and then will not be stained and hence will not harm the quality of the alignment layer.

For example, the organic additive has a special molecular structure. There is an intramolecular hydrogen bond in the molecular structure. In a normal state, the intramolecular hydrogen bond in the organic additive is closed. Under the irradiation of about 290 nm - 400 nm UV light, the organic additive will absorb the energy of the UV light; the intramolecular hydrogen bond is opened and the energy of the bond is released in the form of heat; and the organic additive is restored to the normal state again to continuously absorb the energy of the UV light for the next time. In other words, the organic additive absorbs the energy of external UV light, so as to protect the alignment material composition and other substances in a liquid crystal layer from the irradiation of the UV light energy and finally prevent the damage of the UV light on the liquid crystals and the alignment layer.

The organic additive has good thermal stability, chemical stability, optical stability and miscibility. The organic additive is inactive to react with other components and is not easy to be affected by the subsequent manufacturing processes of the LCD panel.

For example, the organic additive is a benzotriazole compound represented by the following formula: 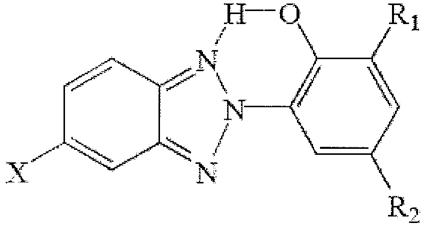 wherein, X is a hydrogen atom or a halogen atom, for example, X represents H, F, Cl, Br or I; R₁ represents H or C₄-C₁₂ alkyl isomer; and R₂ represents CH₃ or C₄-C₈ alkyl isomer.

For example, there is an intramolecular hydrogen bond between a hydrogen atom on a hydroxyl group of a benzene ring of the benzotriazole compound and a nitrogen atom on a triazole ring. Thus, a stable hexatomic ring is formed. When the benzotriazole compound absorbs UV light, the intramolecular hydrogen bond formed between the hydrogen atom on the hydroxyl group of the benzene ring and the nitrogen atom on the triazole ring is broken; intramolecular proton transfer occurs; and protons are transferred to the nitrogen atom to form tautomers. But the generated tautomers are not stable. Thus, excess energy may be released as heat, and the product will return to stable ground state.

For example, when the benzotriazole compound is irradiated by about 290 nm - 400 nm UV light, the benzotriazole compound undergoes the following reaction: 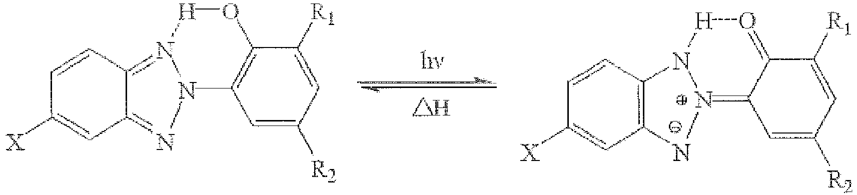 wherein, X represents H, F, Cl, Br or I; R₁ represents H or C₄-C₁₂ alkyl isomer; and R₂ represents CH₃ or C₄-C₈ alkyl isomer.

For example, the chemical formula of the organic additive is:

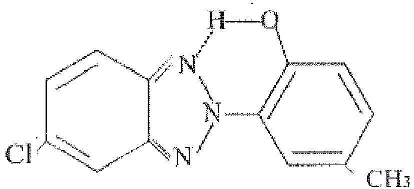

For example, a mass percentage of the organic additive is about 0.5 wt % - 0.8 wt %. For example, a mass percentage of the organic additive may be 0.5 wt %, 0.6 wt %, 0.7 wt % or 0.8 wt %.

For example, organic matters being capable of absorbing UV light generally include: salicylates, benzophenones, benzotriazoles and triazines. For example, the salicylates mainly absorb UV light of about 280 nm - 310 nm, and have low melting point and are easy to sublimate. For example, the benzophenones mainly absorb UV light of about 280 nm - 320 nm, and have poor heat resistance and will be yellowish after long-term UV irradiation. For example, the triazines can absorb partial visible light and tend to be yellowish.

The benzotriazole compound adopted in the embodiments of the present disclosure has high melting point, good stability and high efficiency in absorbing UV light, and almost does not absorb visible light. When added into the alignment material composition, the benzotriazole compound will basically not be stained, has good intermiscibility with polymers in the alignment material composition, and has high stability. Considering that the subsequent application of the alignment material composition involves high-temperature treatment and alignment materials are required to be transparent and colorless, the benzotriazole compound is selected.

For example, a mass percentage of the polyimide resin is about 6 wt % - 8 wt %. For example, a mass percentage of the polyimide resin is 6 wt %, 7 wt % or 8 wt %.

For example, the liquid crystal molecules may be damaged when irradiated by UV light, so it indicates that the damage to the liquid crystal molecules is more severe when the afterimage problem is severe and the afterimage level is higher. For example, in the embodiments of the present disclosure, the anti-UV effects of the alignment material composition detected after the addition of the organic additive into the alignment material composition is determined by the afterimage level.

**Table 1:**

| Mass Percentage of Organic Additive (wt%) | Mask | Afterimage Level |
|---|---|---|
| 0 | None | 3 |
| 0.4 | None | 1 |
| 0.6 | None | 0 |
| 0.8 | None | 1 |

For example, as shown in Table 1, when the mass percentage of the organic additive is respectively 0 wt %, 0.4 wt %, 0.6 wt % and 0.8 wt %, when no mask is applied, corresponding afterimage levels are respectively 3, 1, 0 and 1.

An embodiment of the present disclosure provides an LCD panel. For example, as illustrated in FIG. 2 which is a schematic structural sectional view of the LCD panel provided by the embodiment of the present disclosure, the LCD panel comprises: a first substrate 10 and a second substrate 11 opposed to each other, liquid crystals 12 disposed between the first substrate 10 and the second substrate 12, and an alignment layer 13 disposed on at least one surface of the first substrate 10 and the second substrate 11 close to the liquid crystals. The alignment layer 13 comprises the alignment material composition described in the first embodiment. The first substrate 10 and the second substrate 11 are, for example, combined together via sealant to form a liquid crystal cell.

For example, the alignment layer 13 may have a multi-layered structure. The organic additive is disposed in a layer of the alignment layer 13 away from the liquid crystals 12, being capable of absorbing LV light.

For example, the polyimide resin is disposed in a layer of the alignment layer 13 close to the liquid crystals, so as to align the liquid crystals 12.

For example, the liquid crystals 12 are cholesteric liquid crystals, nematic liquid crystals or smectic liquid crystals as required.

For example, the first substrate 10 is a color filter (CF) substrate including a CF structure (e.g., CF units and black matrixes (BMs)), and the second substrate 11 is an array substrate including an array structure (e.g., gate lines, data lines, thin-film transistors (TFTs) and pixel electrodes).

For example, the LCD panel further comprises main spacers 15 and auxiliary spacers 16 disposed between the first substrate 10 and the second substrate 11 to support the first substrate and the second substrate. The height of the auxiliary spacer 16 is smaller than that of the main spacer 15. In normal conditions, the main spacer 15 supports the substrates. When the extrusion force of the outside environment to the liquid crystal cell is too large so that the auxiliary spacer 16 abuts against the substrate opposite to the auxiliary spacer, the auxiliary spacer 16 may support the substrate.

An embodiment of the present disclosure further provides a display device, which comprises the foregoing display panel. Other structures in the display device may refer to the conventional technique. The display device may, for example, be any product or component with display function such as a mobile phone, a tablet PC, a TV, a display, a notebook computer, a digital picture frame or a navigator.

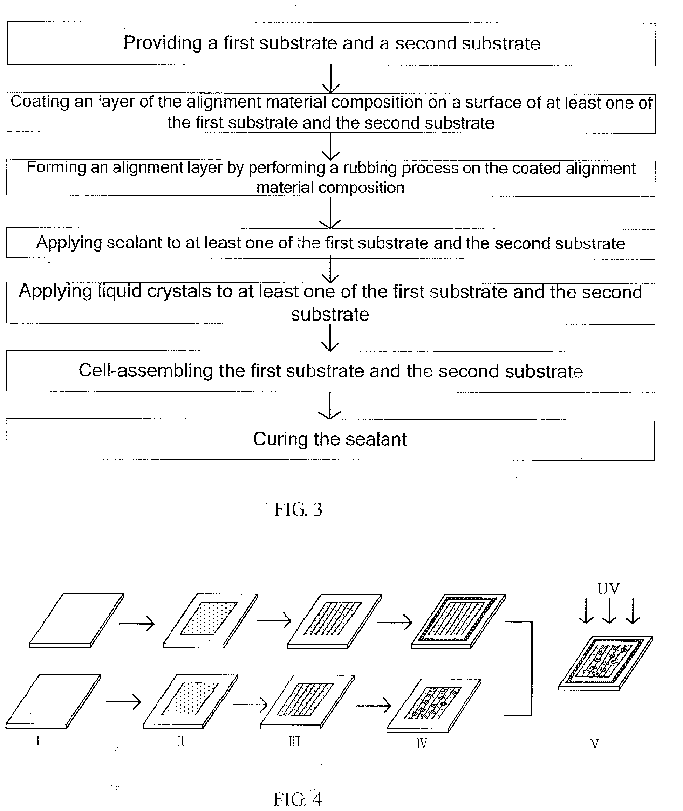

The embodiments of the present disclosure further provide a method for manufacturing an LCD panel. For example, as illustrated in FIG. 3 which is a flow diagram of the method for manufacturing the LCD panel, the manufacturing method comprises: providing a first substrate and a second substrate; coating one layer of the alignment material composition in the first embodiment on at least one surface of the first substrate or the second substrate; forming an alignment layer by performing a rubbing process on the coated alignment material composition; applying sealant to at least one of the first substrate and the second substrate; applying liquid crystals to at least one of the first substrate and the second substrate; cell-assembling the first substrate and the second substrate; and curing the sealant.

For example, the film forming process of the alignment material composition comprises: coating the alignment material composition on a surface of at least one of the first substrate and the second substrate; removing partial organic solvent by pre-curing at the temperature of about 60 °C - 100 °C; performing primary curing at the temperature of about 200 °C - 230 °C; and forming the alignment layer by performing a rubbing process on the alignment material composition.

For example, in the manufacturing method, the liquid crystals may be firstly applied to the second substrate and then cell-assembling the first substrate and the second substrate to form the liquid crystal cell, or the first substrate and the second substrate may be cell-assembled first and then the liquid crystals are filled into the liquid crystal cell.

For example, the curing of the sealant includes UV pre-curing at first and then primary thermocuring. For example, the sealant is irradiated by 290 nm - 400 nm UV light for the pre-curing of the sealant. For example, the primary thermocuring process may adopt resistance wire heating, infrared heating, etc.

For example, before coating the alignment material composition on at least one of the first substrate or the second substrate, the method further comprises: respectively forming a CF structure and an array structure on the first substrate (e.g., a CF substrate) and the second substrate (e.g., an array substrate).

For example, as illustrated in FIG. 4 which is a diagram illustrating the manufacturing process of the LCD panel, provided by the embodiment of the present disclosure, the method comprises the following steps:
I. Providing a first substrate (e.g., a CF substrate) and a second substrate (e.g., an array substrate), and respectively forming a CF structure and an array structure on the first substrate and the second substrate.
II. Respectively coating the alignment material composition of the first embodiment on surfaces of the first substrate and the second substrate.
III. Forming an alignment layer by performing a rubbing process on the alignment material compositions coated on the surfaces of the first substrate and the second substrate.
IV. Applying sealant to the first substrate and applying liquid crystals to the second substrate.

V. Forming a liquid crystal cell by the cell-assembly of the first substrate and the second substrate, and adopting UV light to irradiate the sealant for pre-curing. Compared with the conventional manufacturing process, the step S4 in the embodiment of the present disclosure omits the application of masks, so the method reduces the production cost of the LCD panel, simplifies the manufacturing process of sealant pre-curing, improves the capability of the LCD panel in resisting UV light irradiation, and improves the product quality.

For example, after all the above processes are completed, the sealant is subjected to primary thermocuring.

The alignment material composition, the LCD panel, the manufacturing method thereof and the display device, provided by the embodiments of the present disclosure, have at least one of the following advantages: the alignment material composition not only can form the alignment layer by alignment process but also can effectively protect the liquid crystal molecules from UV light irradiation. Thus, when the alignment material composition is applied to the LCD panel, corresponding UV light masks are not required to be manufactured for LCD panels with different sizes of display regions. Therefore, the production cost of the LCD panel is reduced; the manufacturing process of sealant pre-curing is simplified; the capability of the LCD panel in resisting UV light irradiation is improved; and the product quality is improved.

The following matters should be noted:
(1) The accompanying drawings of the embodiments of the present disclosure only involve the structures relevant to the embodiments of the present disclosure, and other structures may refer to the conventional technique;
(2) For clarity, in the accompanying drawings of the embodiments of the present disclosure, the thickness of layers or regions is enlarged or reduced, namely the accompanying drawings are not drawn according to actual scale. It should be understood that: when an element such as a layer, a film, a region or a substrate is referred to as being disposed "on" or "beneath" another element, the element may be "directly" disposed "on" or "beneath" the other element, or an intermediate element may be provided.

## Claims

1. An alignment material composition, comprising:
about 89 wt % - 94.9 wt % of an organic solvent;
about 0.1 wt % - 1 wt % of an organic additive; and
about 5 wt % - 10 wt % of polyimide resin, wherein
the organic additive is capable of absorbing ultraviolet, UV, light of wavelength from about 290 nm to about 400 nm;
**characterized in that**
the organic additive comprises: 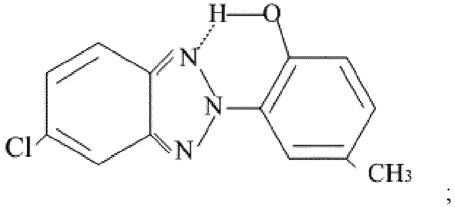
the organic solvent comprises N-methyl-2-pyrrolidone, γ-butyrolactone and butyl cellosolve; and
in the alignment material composition, a mass percentage of N-methyl-2-pyrrolidone is about 15 wt % - 20 wt %, a mass percentage of γ-butyrolactone is about 60 wt % - 70 wt %, and a mass percentage of butyl cellosolve is about 10 wt % - 15 wt %.

2. The alignment material composition according to claim 1, wherein a mass percentage of the organic additive to the alignment material composition is about 0.5 wt % - 0.8 wt %.

3. The alignment material composition according to claim 2, wherein a mass percentage of the organic additive to the alignment material composition is about 0.6 wt %.

4. The alignment material composition according to any one of claims 1 to 3, wherein a mass percentage of the polyimide resin to the alignment material composition is about 6 wt % - 8 wt %.

5. A liquid crystal display, LCD, panel, comprising:
a first substrate (10) and a second substrate (11) opposed to each other;
liquid crystals (12) between the first substrate (10) and the second substrate (11); and
an alignment layer (13) disposed on a surface of at least one of the first substrate (10) and the second substrate (11), which surface is close to the liquid crystals (12), wherein
the alignment layer (13) comprises the alignment material composition according to any one of claims 1 to 4.

6. The LCD panel according to claim 5, wherein the alignment layer (13) has a multi-layered structure; and the organic additive is disposed in a layer structure of the alignment layer (13), which layer structure is away from the liquid crystals (12) and is capable of absorbing UV light.

7. The LCD panel according to claim 6, wherein the polyimide resin is disposed in a layer structure of the alignment layer (13), which layer structure is close to the liquid crystals (12), and is capable of aligning the liquid crystals (12).

8. The LCD panel according to any one of claims 6 to 7, wherein the first substrate (10) is an array substrate and the second substrate (11) is a color filter, CF, substrate.

9. A display device, comprising the LCD panel according to any one of claims 6 to 8.

10. A method for manufacturing a liquid crystal display, LCD, panel, comprising:
providing a first substrate (10) and a second substrate (11);
coating an layer of the alignment material composition according to any one of claims 1 to 4 on a surface of at least one of the first substrate (10) and the second substrate (11);
forming an alignment layer (13) by performing a rubbing process on the coated alignment material composition;
applying a sealant to at least one of the first substrate (10) and the second substrate (11);
applying liquid crystals (12) to at least one of the first substrate (10) and the second substrate (11);
cell-assembling the first substrate (10) and the second substrate (11); and
curing the sealant.

11. The manufacturing method according to claim 10, wherein the first substrate (10) and the second substrate (11) are respectively a color filter, CF, substrate and an array substrate; and before coating the layer of the alignment material composition according to any one of claims 1 to 4 on the surface of at least one of the first substrate (10) and the second substrate (11), a color filter, CF, structure and an array structure are respectively formed on the first substrate (10) and the second substrate (11).

## Patentansprüche

1. Ausrichtungsmaterialzusammensetzung mit:
etwa 89 Gew.-% - 94,9 Gew.-% eines organischen Lösungsmittels;
etwa 0,1 Gew.-% - 1 Gew.-% eines organischen Additivs; und
etwa 5 Gew.-% - 10 Gew.-% eines Polyimidharzes, wobei
das organische Additiv in der Lage ist, ultraviolettes, UV-, Licht der Wellenlänge von etwa 290 nm bis etwa 400 nm zu absorbieren;
**dadurch gekennzeichnet, dass**
das organische Additiv aufweist: 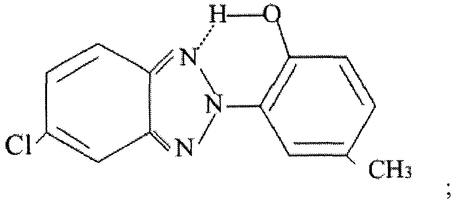
das organische Lösungsmittel N-Methyl-2-pyrrolidon, γ-Butyrolacton und Butylcellosolve aufweist; und
in der Ausrichtungsmaterialzusammensetzung ein Massenprozentsatz von N-Methyl-2-pyrrolidon etwa 15 Gew.-% - 20 Gew.-%, ein Massenprozentsatz von γ-Butyrolacton etwa 60 Gew.-% - 70 Gew.-% und ein Massenprozentsatz von Butylcellosolve etwa 10 Gew.-% - 15 Gew.-% beträgt.

2. Ausrichtungsmaterialzusammensetzung nach Anspruch 1, wobei der Massenanteil des organischen Additivs an der Ausrichtungsmaterialzusammensetzung etwa 0,5 Gew.-% - 0,8 Gew.-% beträgt.

3. Ausrichtungsmaterialzusammensetzung nach Anspruch 2, wobei der Massenprozentsatz des organischen Additivs in der Ausrichtungsmaterialzusammensetzung etwa 0,6 Gew.-% beträgt.

4. Ausrichtungsmaterialzusammensetzung nach einem der Ansprüche 1 bis 3, wobei der Massenanteil des Polyimidharzes an der Ausrichtungsmaterialzusammensetzung etwa 6 Gew.-% bis 8 Gew.-% beträgt.

5. Flüssigkristallanzeige-, LCD-, Panel mit:
einem ersten Substrat (10) und einem zweiten Substrat (11), die einander gegenüberliegen;
Flüssigkristallen (12) zwischen dem ersten Substrat (10) und dem zweiten Substrat (11); und
einer Ausrichtungsschicht (13), die auf einer Oberfläche von mindestens einem des ersten Substrats (10) und des zweiten Substrats (11) angeordnet ist, wobei die Oberfläche nahe bei den Flüssigkristallen (12) liegt, wobei
die Ausrichtungsschicht (13) die Ausrichtungsmaterialzusammensetzung nach einem der Ansprüche 1 bis 4 aufweist.

6. LCD-Panel nach Anspruch 5, wobei die Ausrichtungsschicht (13) eine mehrschichtige Struktur aufweist; und das organische Additiv in einer Schichtstruktur der Ausrichtungsschicht (13) angeordnet ist, wobei diese Schichtstruktur von den Flüssigkristallen (12) entfernt ist und UV-Licht absorbieren kann.

7. LCD-Panel nach Anspruch 6, wobei das Polyimidharz in einer Schichtstruktur der Ausrichtungsschicht (13) angeordnet ist, wobei die Schichtstruktur nahe bei den Flüssigkristallen (12) liegt und in der Lage ist, die Flüssigkristalle (12) auszurichten.

8. LCD-Panel nach einem der Ansprüche 6 bis 7, wobei das erste Substrat (10) ein Array-Substrat und das zweite Substrat (11) ein Farbfilter-, CF-, Substrat ist.

9. Anzeigevorrichtung mit dem LCD-Panel nach einem der Ansprüche 6 bis 8.

10. Verfahren zur Herstellung eines Flüssigkristallanzeige-, LCD-, Panels, mit:
Bereitstellen eines ersten Substrats (10) und eines zweiten Substrats (11);
Beschichten einer Schicht aus der Ausrichtungsmaterialzusammensetzung nach einem der Ansprüche 1 bis 4 auf einer Oberfläche von mindestens einem von dem ersten Substrat (10) und dem zweiten Substrat (11);
Bilden einer Ausrichtungsschicht (13) durch Ausführen eines Reibvorgangs an der beschichteten Ausrichtungsmaterialzusammensetzung;
Aufbringen eines Dichtungsmittels auf mindestens eines des ersten Substrats (10) und des zweiten Substrats (11);
Aufbringen von Flüssigkristallen (12) auf mindestens eines von dem ersten Substrat (10) und dem zweiten Substrat (11);
Zellmontage des ersten Substrats (10) und des zweiten Substrats (11); und
Aushärten des Dichtungsmittels.

11. Herstellungsverfahren nach Anspruch 10, wobei das erste Substrat (10) und das zweite Substrat (11) jeweils ein Farbfilter-, CF-, Substrat und ein Array-Substrat sind; und vor dem Auftragen der Schicht der Ausrichtungsmaterialzusammensetzung nach einem der Ansprüche 1 bis 4 auf die Oberfläche des ersten Substrats (10) und/oder des zweiten Substrats (11) jeweils eine Farbfilter-, CF-, Struktur und eine Array-Struktur auf dem ersten Substrat (10) und dem zweiten Substrat (11) gebildet werden.

## Revendications

1. Composition de matériau d'alignement, comprenant :
environ 89 % en poids à 94,9 % en poids d'un solvant organique ;
environ 0,1 % en poids à 1 % en poids d'un additif organique ; et
environ 5 % en poids à 10 % en poids d'une résine polyimide, dans laquelle
l'additif organique dispose de la capacité d'absorber la lumière ultraviolette, UV, d'une longueur d'onde d'environ 290 nm à environ 400 nm ;
**caractérisée en ce que**
l'additif organique comprend : 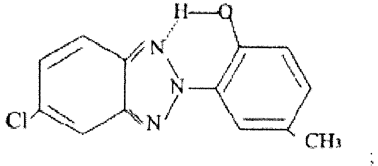
le solvant organique comprend du N-méthyl-2-pyrrolidone, du γ-butyrolactone et du butyle cellulose ; et
dans la composition de matériau d'alignement, un pourcentage en masse du N-méthyl-2-pyrrolidone est compris entre environ 15 % en poids et 20 % en poids, un pourcentage en masse du γ-butyrolactone est compris entre environ 60 % en poids et 70 % en poids et un pourcentage en masse du butyle cellulose est compris entre environ 10 % en poids et 15 % en poids.

2. Composition de matériau d'alignement selon la revendication 1, dans laquelle un pourcentage en masse de l'additif organique par rapport à la composition de matériau d'alignement est compris entre environ 0,5 % en poids et 0,8 % en poids.

3. Composition de matériau d'alignement selon la revendication 2, dans laquelle un pourcentage en masse de l'additif organique par rapport à la composition de matériau d'alignement est d'environ 0,6 % en poids.

4. Composition de matériau d'alignement selon l'une quelconque des revendications 1 à 3, dans laquelle un pourcentage en masse de la résine polyimide par rapport à la composition de matériau d'alignement est compris entre environ 6 % en poids et 8 % en poids.

5. Panneau d'affichage à cristaux liquides, LCD, comprenant :
un premier substrat (10) et un second substrat (11) qui sont opposés l'un à l'autre ;
des cristaux liquides (12) entre le premier substrat (10) et le second substrat (11) ; et
une couche d'alignement (13) qui est disposée sur une surface d'au moins un substrat pris parmi le premier substrat (10) et le second substrat (11), laquelle surface est proche des cristaux liquides (12), dans lequel
la couche d'alignement (13) comprend la composition de matériau d'alignement selon l'une quelconque des revendications 1 à 4.

6. Panneau LCD selon la revendication 5, dans lequel la couche d'alignement (13) comporte une structure à multiples couches ; et l'additif organique est disposé dans une structure de couches de la couche d'alignement (13), laquelle structure de couches est éloignée des cristaux liquides (12) et dispose de la capacité d'absorber la lumière UV.

7. Panneau LCD selon la revendication 6, dans lequel la résine polyimide est disposée dans une structure de couches de la couche d'alignement (13), laquelle structure de couches est proche des cristaux liquides (12) et dispose de la capacité d'aligner les cristaux liquides (12).

8. Panneau LCD selon l'une quelconque des revendications 6 et 7, dans lequel le premier substrat (10) est un substrat de matrice et le second substrat (11) est un substrat à filtre couleur, CF.

9. Dispositif d'affichage, comprenant le panneau LCD selon l'une quelconque des revendications 6 à 8.

10. Procédé pour fabriquer un panneau d'affichage à cristaux liquides, LCD, comprenant :
la fourniture d'un premier substrat (10) et d'un second substrat (11) ;
le dépôt d'une couche de la composition de matériau d'alignement selon l'une quelconque des revendications 1 à 4 sur une surface d'au moins un substrat pris parmi le premier substrat (10) et le second substrat (11) ;
la formation d'une couche d'alignement (13) en réalisant un processus de frottement sur la composition de matériau d'alignement déposée ;
l'application d'un agent de scellement sur au moins un substrat pris parmi le premier substrat (10) et le second substrat (11) ;
l'application de cristaux liquides (12) sur au moins un substrat pris parmi le premier substrat (10) et le second substrat (11) ;
l'assemblage sous forme de cellule du premier substrat (10) et du second substrat (11) ; et
le durcissement de l'agent de scellement.

11. Procédé de fabrication selon la revendication 10, dans lequel le premier substrat (10) et le second substrat (11) sont respectivement un substrat à filtre couleur, CF, et un substrat de matrice ; et avant le dépôt de la couche de la composition de matériau d'alignement selon l'une quelconque des revendications 1 à 4 sur la surface d'au moins un substrat pris parmi le premier substrat (10) et le second substrat (11), une structure à filtre couleur, CF, et une structure de matrice sont respectivement formées sur le premier substrat (10) et sur le second substrat (11).
